# EUROPEAN PATENT APPLICATION

(11) **EP 4 836 106 A1**
(43) Date of publication of application: **04.11.2026**
(21) Application number: 24912147.6
(22) Date of filing: 25.11.2024
(51) Int. Cl.: H01M 50/119, H01M 50/107, H01M 50/128

(54) **NON-AQUEOUS ELECTROLYTE SECONDARY BATTERY**

(30) Priority: 26.12.2023 JP 2023219102
(71) Applicant: Panasonic Intellectual Property Management Co., Ltd., Kadoma-shi, Osaka 571-0057 (JP)
(72) Inventor: OTAKE, Yuji, Kadoma-shi, Osaka 571-0057 (JP)
(74) Representative: Novagraaf International SA
(86) International application number: PCT/JP2024/041644
(87) International publication number: WO 2025/142255

(57) **Abstract**

A non-aqueous electrolyte secondary battery (10) is provided with: an electrode body (14); a bottomed cylindrical outer can (20) that contains a first metal material; and a sealing body (30) that closes an opening (24) of the outer can (20). The non-aqueous electrolyte secondary battery (10) is characterized in that the side surface of the outer can (20) on the opening (24) side is provided with an annular groove (23) that is recessed inward in the radial direction of the outer can, inside the annular groove (23), there is a protective member (40) that abuts at least a portion of the surface of the annular groove (23) and contains a second metal material, and the melting point of the second metal material is lower than the melting point of the first metal material and is 500°C or lower.

## Description

### TECHNICAL FIELD

The present disclosure relates to a non-aqueous electrolyte secondary battery.

### BACKGROUND

A non-aqueous electrolyte secondary battery including an electrode assembly having a positive electrode and a negative electrode, a cylindrical housing can with a bottom, containing the electrode assembly, and a sealing assembly that closes an opening portion of the housing can has been conventionally known. The sealing assembly is supported on an upper face of an annular groove disposed on a side face of the housing can, and is crimped and fixed on the opening portion of housing can. The sealing assembly is thereby secured on an upper part of the housing can.

Patent Document 1 discloses a non-aqueous electrolyte secondary battery including an insulative coating layer disposed on the entire side face, including the inside of an annular groove, of a housing can. Patent Document 1 further discloses that including a coating layer enables a reduction in occurrence of short circuit caused by dust of a metal material forming the housing can during the production process.

### CITATION LIST

### PATENT LITERATURE

[Patent Document 1] JP 2005-071710 A

### SUMMARY

In a non-aqueous electrolyte secondary battery, abnormal heat generation of the electrode assembly may occur by application of a large current to the electrode assembly at the time of occurrence of external short circuit in a charging state of the battery, for example. This may further cause generation of gas within the battery to thereby increase the internal pressure of the interior of the battery and damage the housing can. The damage of the housing can further causes jetting of the gas through the damaged portions, which is not desirable in terms of securing battery safety.

Studies by the present inventors have revealed that the damage to the housing can at the time of battery abnormality described above may occur in an annular groove disposed in the housing can. It is therefore a significant object to inhibit damage to the annular groove at the time of occurrence of abnormality of a battery.

In accordance with an aspect of the present disclosure, a non-aqueous electrolyte secondary battery, includes: an electrode assembly including a positive electrode and a negative electrode; a non-aqueous electrolyte; a cylindrical housing can having a bottom, the housing can housing the electrode assembly and the non-aqueous electrolyte and containing a first metal material; and a sealing assembly that closes an opening portion of the housing can. The housing can includes, on a side face of the housing can, an annular groove that is recessed radially inward of the housing can. A protective member containing a second metal material is disposed within the annular groove, and the protective member is in contact with at least a portion of a surface of the annular groove. The second metal material has a melting point that is lower than a melting point of the first metal material and is equal to or lower than 500°C.

The non-aqueous electrolyte secondary battery according to an embodiment of the present disclosure enables inhibition of damage to the annular groove at the time of occurrence of abnormality of the battery. It is therefore possible to provide a non-aqueous electrolyte secondary battery with high level of safety.

### BRIEF DESCRIPTION OF DRAWINGS

[FIGURE 1] FIG. 1 is an axial cross sectional view of a non-aqueous electrolyte secondary battery according to an example embodiment.
[FIGURE 2] FIG. 2 is an enlarged view of the vicinity of an annular groove disposed in a housing can illustrated in FIG. 1.
[FIGURE 3] FIG. 3 is an axial cross sectional view of a non-aqueous electrolyte secondary battery according to another example embodiment, and an enlarged view of the vicinity of an annular groove disposed in a housing can.
[FIGURE 4] FIG. 4 is an axial cross sectional view of a non-aqueous electrolyte secondary battery according to a further example embodiment, and an enlarged view of the vicinity of an annular groove disposed in a housing can.

### DESCRIPTION OF EMBODIMENTS

A non-aqueous electrolyte secondary battery according to an example embodiment of the present disclosure will be described in detail below by reference to the drawings. The embodiment described below is only an example, and the present disclosure is not limited to the embodiment below. Further, any embodiments including selective combinations of elements of the embodiment described below are encompassed in the present disclosure.

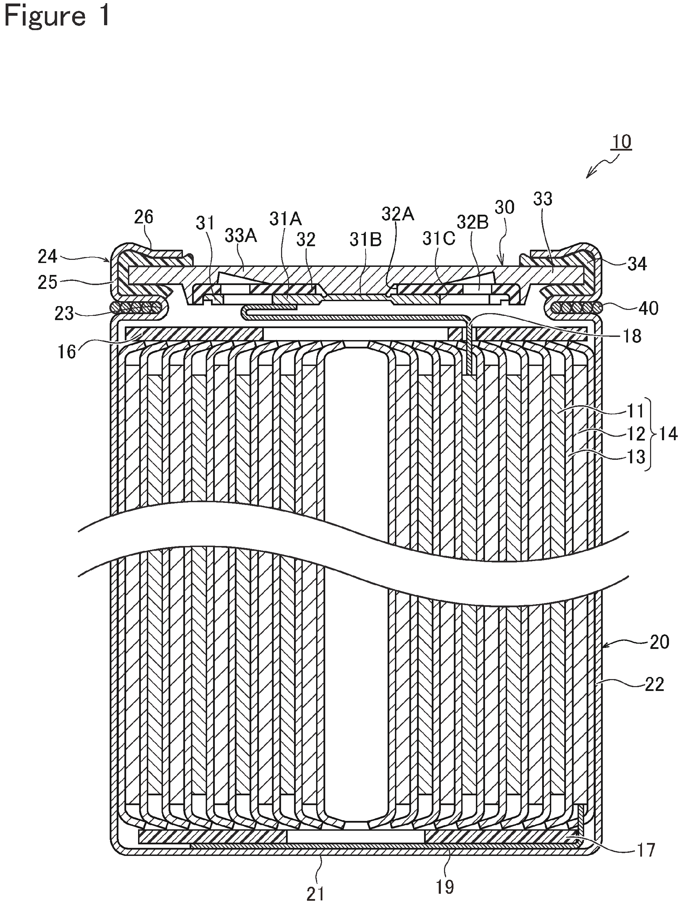

FIG. 1 is an axial cross sectional view of a non-aqueous electrolyte secondary battery 10 according to an example embodiment. As illustrated in FIG. 1, the non-aqueous electrolyte secondary battery 10 includes an electrode assembly 14, a non-aqueous electrolyte (not shown), and a housing can 20 that houses the electrode assembly 14 and the non-aqueous electrolyte. The housing can 20 is a cylindrical metallic container with a bottom, which is open on one axial end. An opening portion 24 of the housing can 20 is closed with a sealing assembly 30. In the following description, a side of the non-aqueous electrolyte secondary battery 10 toward the sealing assembly 30 in the axial direction (height direction) is defined as an "upper" side and a side of the non-aqueous electrolyte secondary battery 10 toward a bottom portion 21 of the housing can 20 is defined as a "lower" side.

The electrode assembly 14 includes a positive electrode 11, a negative electrode 12, and a separator 13, and has a configuration in which the positive electrode 11 and the negative electrode 12 are wound spirally with the separator 13 interposed between the positive electrode 11 and the negative electrode 12. The positive electrode 11, the negative electrode 12, and the separator 13 are all belt-shape elongated members, and are alternately laminated in the radial direction of the electrode assembly 14 by being wound spirally. The negative electrode 12 is formed one size larger than the positive electrode 11 to prevent precipitation of lithium. That is, the negative electrode 12 is longer than the positive electrode 11 in the longitudinal direction and the width direction (short-side direction). The separator 13 is one size larger than at least the positive electrode 11, and two separators 13 are disposed to sandwich the positive electrode 11. The non-aqueous electrolyte secondary battery 10 includes insulating plates 16 and 17 disposed above and below the electrode assembly 14, respectively.

The positive electrode 11 includes a positive electrode core and a positive electrode mixture layer disposed on the positive electrode core. The positive electrode core may include a foil of a metal that is stable in a potential range of the positive electrode 11, such as aluminum or an aluminum alloy, and a film with the metal disposed on a surface layer thereof The positive electrode mixture layer includes a positive electrode active material, a conductive agent, and a binder, and is preferably disposed on each side of the positive electrode core except a positive electrode core exposed portion (not shown) on which a positive electrode lead 18 is welded. The positive electrode 11 may be fabricated by coating the positive electrode core with a positive electrode mixture slurry containing the positive electrode active material, the conductive agent, and the binder, for example, letting the coating film dry and then compressing to form the positive electrode mixture layer on each side of the positive electrode core.

The positive electrode mixture layer contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, and Mn is preferable. Examples of suitable composite oxides include a lithium metal composite oxide containing Ni, Co, and Mn, and a lithium metal composite oxide containing Ni, Co, and Al.

Examples of the conductive agent included in the positive electrode mixture layer include carbon black such as acetylene black and Ketjen black, graphite, carbon nanotubes (CNT), carbon nanofibers, graphene, and other carbon materials. Examples of the binder included in the positive electrode mixture layer include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode core and a negative electrode mixture layer formed on the negative electrode core. The negative electrode core may be a foil of a metal that is stable in a potential range of the negative electrode 12 such as copper or a copper alloy or a film with the metal disposed on a surface layer. The negative electrode mixture layer includes a negative electrode active material, a binder, and, if necessary, a conductive agent, and is preferably disposed on both sides of the negative electrode core excluding a negative electrode core exposed portion (not shown) where a negative electrode lead 19 is welded. The negative electrode can be fabricated by coating a surface of the negative electrode core with a negative electrode mixture slurry containing the negative electrode active material and the binder, for example, leaving the coating film dry, and then compressing to form the negative electrode mixture layer on each side of the negative electrode core.

The negative electrode mixture layer typically contains, as the negative electrode active material, a carbon material that reversibly occludes and releases lithium ions. Preferable examples of the carbon material include a graphite including a natural graphite such as a flake graphite, a massive graphite, or an earthy graphite, or an artificial graphite such as massive artificial graphite (MAG) or graphitized mesophase carbon microbeads (MCMB). The negative electrode active material may also be a material containing at least one of an element that is alloyed with Li such as Si and Sn, or a material containing such an element. Among these materials, a composite material containing Si is preferable.

A preferable example of the composite material containing Si includes a material containing Si fine particles dispersed in an SiO₂ phase or a silicate phase such as lithium silicate, or a material containing Si fine particles dispersed in amorphous carbon phase. A conductive layer such as a carbon coat, for example, is formed on the particle surface of this composite material.

As in the case of the positive electrode mixture layer, although fluorine-containing resin, PAN, polyimide, acrylic resin, and polyolefin, for example, can be used for the binder included in the negative electrode mixture layer, styrene butadiene rubber (SBR) is preferably used. In addition, the negative electrode mixture layer preferably contains CMC or its salts, polyacrylic acid (PAA) or its salts, or polyvinyl alcohol (PVA), for example. In particular, SBR is preferably used in combination with CMC or its salts, PAA or its salts, or the like. The negative electrode mixture layer may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

A positive electrode lead 18 is connected to the positive electrode 11 and a negative electrode lead 19 is connected to a winding end-side of the negative electrode 12. The positive electrode lead 18 extends through a through-hole in the insulating plate 16 toward the sealing assembly 30, and the negative electrode lead 19 extends outside of the insulating plate 17 toward the bottom portion 21 of the housing can 20. The positive electrode lead 18 is connected to a lower surface of an internal terminal plate 31 of the sealing assembly 30 by welding or the like to enable the sealing assembly 30 to function as a positive electrode terminal. In addition, the negative electrode lead 19 is connected to an inner surface of the bottom portion 21 of the metallic housing can 20 by welding or the like to enable the housing can 20 to function as a negative electrode terminal.

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, esters, ethers, nitriles, amides, and mixtures of two or more of these substances are used, for example. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents are replaced with halogen atoms such as fluorine. For example, lithium salts such as LiPF₆ are used as the electrolyte salts.

As the solid electrolyte, a solid or gel polymer electrolyte, an inorganic solid electrolyte, and the like can be used, for example. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, a polymer material that absorbs a non-aqueous solvent and becomes a gel is used, for example. Examples of polymer materials include fluorine resins, acrylic resins, and polyether resins.

The housing can 20 is a cylindrical container having a bottom, with one side in the axial direction being open. The housing can 20 has the bottom portion 21 and a side face portion 22 constituting a side wall of the non-aqueous electrolyte secondary battery 10. The side face portion 22 is a portion of the housing can 20 excluding the bottom portion 21 and includes an annular groove 23 which will be described below and an opening portion 24.

The housing can 20 contains a metal material (first metal material). Examples of the first metal material include, for example, iron, stainless steel, aluminum, aluminum alloy, and nickel. In the present embodiment, the housing can 20 is composed of a steel material containing iron as a main component.

The annular groove 23 is a portion of the side face portion 22 that is recessed radially inward and is disposed annularly along the circumferential direction of the housing can 20. The annular groove 23 supports the sealing assembly 30 on the top face of the annular groove 23. The annular groove 23 can be formed by, for example, spinning a portion of the side face portion 22 radially inward to make the side face portion annularly recessed radially inward. The width of the annular groove 23 (the axial length) is not particularly limited, and is greater than or equal to 0.1 mm and equal to or less than 2.0 mm. The depth (radial length) of the annular groove 23 is not particularly limited and is greater than or equal to 0.5 mm and equal to or less than 5.0 mm. As will be described in detail below, a protective member 40 is disposed within the annular groove 23.

The opening portion 24 is a region of the side face portion 22 located above the annular groove 23, and constitutes an opening of the housing can 20. At the time of crimping and fixing the sealing assembly 30 onto the housing can 20, the opening portion 24 is folded radially inward. The opening portion 24 thus has an opening side face portion 25 constituting a portion of the side face of the non-aqueous electrolyte secondary battery 10 and covering the outer periphery of a gasket 34, and a crimped portion 26 constituting a portion of the top face of the non-aqueous electrolyte secondary battery 10 and extending radially inward. In the present embodiment, the radially inward end of the crimped portion 26 is located further radially outward than the radially inward end of the gasket 34. Thus, a portion of the top face of the gasket 34 is not covered with the crimped portion 26.

The sealing assembly 30 is a disk-shaped member having a safety valve. The sealing assembly 30 has a structure in which the internal terminal plate 31, an insulating member 32, and an external terminal plate 33 are stacked sequentially from the top side adjacent the electrode assembly 14.

The internal terminal plate 31 is a metal plate that includes a thick portion 31A to which the positive electrode lead 18 is connected and a thin central portion 31B that is to be detached from the thick portion 31A when the internal pressure of the battery exceeds a predetermined threshold. The thick portion 31A includes a plurality of vent holes 31C.

The insulating member 32 provides electrical isolation between the internal terminal plate 31 and the external terminal plate 33 except their connection portion. The insulating member 32 includes an opening portion 32A in the radially center portion, and also has a vent hole 32B in a portion that overlaps with the vent hole 31C of the internal terminal plate 31.

The external terminal plate 33 constitutes a part of the top face of the non-aqueous electrolyte secondary battery 10, and is disposed opposite the internal terminal plate 31, with the insulating member 32 being interposed between the external terminal plate 33 and the internal terminal plate 31. The external terminal plate 33 includes a thin portion 33A that ruptures when the internal pressure of the secondary battery 10 exceeds a predetermined threshold. The external terminal plate 33 is welded or otherwise connected to the central portion 31B of the internal terminal plate 31. Further, a radially outward portion of the external terminal plate 33 is disposed between the crimped portion 26 formed by bending the opening of the housing can 20 inward and the annular groove 23, with the gasket 34 being disposed between the crimped portion 26 and the annular groove 23.

Upon the rise of the internal pressure due to an abnormality occurring in the non-aqueous electrolyte secondary battery 10, high-temperature gas that is generated pushes the internal terminal plate 31 upward and ruptures the internal terminal plate 31 to separate the central portion 31B from the thick portion 31A, causing the external terminal plate 33 to deform so as to protrude outward of the battery. This interrupts a current path in the sealing assembly 30. With further rise in the internal pressure of the non-aqueous electrolyte secondary battery 10 after the interruption of the current path, the thin portion 33A of the external terminal plate 33 ruptures, which creates an exhaust port for gas in the external terminal plate 33.

The structure of the sealing assembly 30 is not limited to the structure illustrated in FIG. 1. The sealing assembly 30 may have a convex cap that covers the external terminal plate 33, for example.

The gasket 34 is a flexible insulating member. The gasket 34 electrically isolates the sealing assembly 30 serving as the positive electrode terminal from the housing can 20 serving as the negative electrode terminal, and is vertically compressed to thereby secure airtightness within the housing can 20. Material of the gasket 34 may be any compressible insulating material and is not particularly limited, and may be, for example, polypropylene (PP), polyphenylene sulfide (PPS), polyethylene (PE), polybutylene terephthalate (PBT), perfluoroalkoxyalkane (PFA), polytetrafluoroethylene (PTFE), or polyamide (PA).

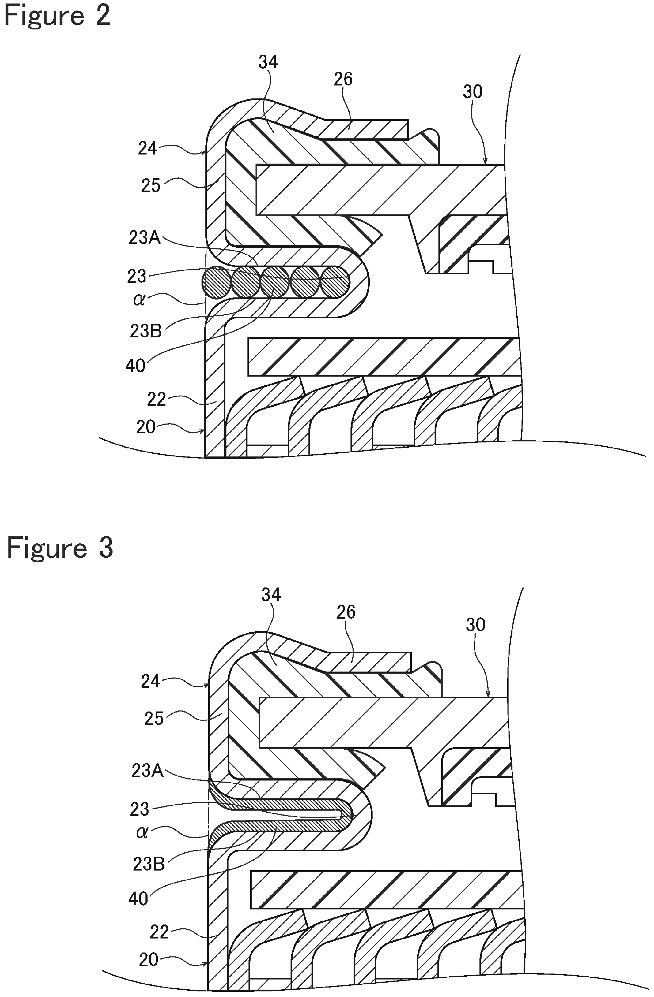

With further reference to FIG. 2 and FIG. 3, the protective member 40 will be described in detail. FIG. 2 is an enlarged view of a portion in the vicinity of the annular groove 23 illustrated in FIG. 1, and schematically illustrates the shape of the protective member 40.

As illustrated in FIG. 2, the protective member 40 composed of a metal material is disposed inside the annular groove 23. In the present embodiment, the protective member 40 has a wire shape and extends along the circumferential direction of the housing can 20. The protective member 40 is wound in the annular groove 23 a plurality of times to be disposed over the substantially entire region inside the annular groove 23 and is therefore in contact with an upper face 23A and a lower face 23B of the annular groove 23.

Studies by the present inventors have revealed that at the time of an increase in the internal pressure of the battery caused by generation of gas within the battery due to abnormal heat generation of the electrode assembly 14, the housing can 20 may be damaged in a region where the annular groove 23 is disposed. It is assumed that, although the detailed mechanism is not known, an electric spark emitted on the outer peripheral portion of the electrode assembly 14 may hit the annular groove 23 at the time of abnormal heat generation of the electrode assembly 14. This would cause an excessive rise in the temperature in the vicinity of the annular groove 23 and cause damage to the housing can 20 in the region where the annular groove 23 is disposed.

The protective member 40 contains a metal material (second metal material) that differs from a first metal material (a steel material in the present embodiment) constituting the housing can 20, and is disposed in contact with the upper face 23A and the lower face 23B of the annular groove 23. Here, the second metal material constituting the protective member 40 has a melting point that is lower than the melting point of the first metal material constituting the housing can 20, and is equal to or lower than 500°C. The second metal material contained in the protective member 40 would melt first when the temperature in the vicinity of the annular groove 23 excessively rises due to abnormal heat generation of the electrode assembly 14. This mitigates a temperature rise in the vicinity of the annular groove 23 due to a heat absorption effect of the protective member 40 caused by melting to thereby reduce the damage to the annular groove 23 at the time of occurrence of abnormality of the battery. The protective member 40 preferably contains the second metal material as a primary component. The primary component as used herein refers to a component in the material constituting the protective member 40 having the highest mass ratio. The protective member 40 preferably contains 80 mass% or more of the second metal material. In this embodiment, the protective member 40 is composed only of the second metal material.

The melting point of the second metal material contained in the protective member 40 is lower than the melting point of the first metal material contained in the housing can 20, and may be equal to or lower than 500°C, preferably equal to or lower than 400°C, and more preferably equal to or lower than 300°C. The second metal material contained in the protective member 40, which has a lower melting point, enables further mitigation of the temperature rise in the vicinity of the annular groove 23 at the time of occurrence of abnormality of the battery.

The second metal material contained in the protective member 40 preferably includes at least one selected from the group consisting of tin, lead, and zinc. Including at least one selected from the group consisting of tin, lead, and zinc facilitates setting of the melting point of the second metal material to be equal to or lower than 500°C. The second metal material may be an alloy containing at least two selected from the group consisting of tin, lead, and zinc. An example of the second metal material constituting the protective member 40 is an alloy material such as solder.

As described above, the protective member 40 has a wire shape. In the present embodiment, the protective member 40 has a substantially circular cross sectional shape. The protective member 40 may have any size that is insertable into the annular groove 23, and has a wire diameter of equal to or greater than 0.1 mm and equal to or less than 2.0 mm. The cross sectional shape of the protective member 40 is not limited to a circular shape and may be an elliptical shape or a rectangular shape.

In the present embodiment, the protective member 40 is disposed in the substantially entire region within the annular groove 23. In other words, the ratio of the area of the protective member 40 within the annular groove 23 relative to the area of the space in the annular groove 23 is equal to or greater than 80%. Setting the ratio of the area of the protective member 40 relative to the area of the space in the annular groove 23 to equal to or greater than 80% secures the volume of the protective member 40 to thereby increase the heat absorption effect due to melting of the protective member 40 at the time of abnormal heat generation of the electrode assembly 14. This results in further

mitigation of the temperature rise in the vicinity of the annular groove 23, thereby further reducing damage to the annular groove 23 at the time of occurrence of abnormality of the battery. Here, the area of the space in the annular groove 23 in an axial cross sectional view of the housing can 20 refers to the area of a region enclosed by a virtual line α along the outer face of the side face portion 22 of the housing can 20 and the wall face of the annular groove 23.

The ratio of the area of the protective member 40 relative to the area of the space in the annular groove 23 in the axial cross sectional view of the housing can 20 is preferably equal to or greater than 85%, and more preferably equal to or greater than 90%. An increase in the ratio of the area of the protective member 40 relative to the area of the space in the annular groove 23 enables a further increase in the heat absorption effect due to melting of the protective member 40 at the time of abnormal heat generation of the electrode assembly 14. The ratio of the area of the protective member 40 relative to the area of the space in the annular groove 23 may be substantially 100%; that is, the protective member 40 may be disposed to fill the entire space in the annular groove 23.

The design of the above embodiment may be modified as appropriate without impairing the object of the present disclosure. For example, while in the above embodiment, the protective member 40 has a wire shape, the protective member 40 may have any shape that is in contact with at least a portion of the surface of the annular groove. The protective member 40 may be a plate-like member having an annular shape or an arc shape in a plan view. The protective member 40 may be composed of two plate-like members each having a semi-circular shape in a plan view, and may be fitted into the annular groove 23 from outward of the housing can 20 and fixed to the annular groove 23.

Further, while in the above embodiment, the protective member 40 is disposed in contact with the upper face 23A and the lower face 23B of the annular groove 23, the protective member 40 may be in contact with only one of the upper face 23A or the lower face 23B of the annular groove 23. In the event of abnormal heat generation of the battery, the temperature of the lower face 23B of the annular groove 23 is more likely to rise than the temperature of the upper face 23A. The protective member 40 is therefore preferably in contact with at least the lower face 23B of the annular groove 23.

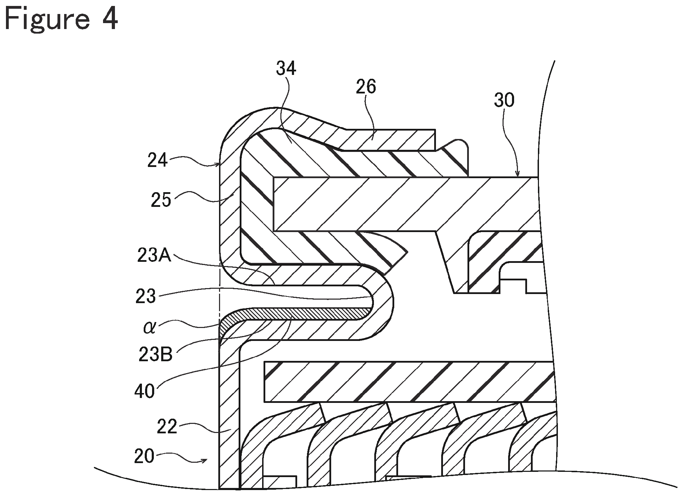

Further, as illustrated in FIGs. 3 and 4, the protective member 40 may be disposed to cover at least a portion of the surface of the annular groove 23, for example. In the example illustrated in FIG. 3, the protective member 40 is disposed to cover the substantially entire region of the surface of the annular groove 23, and in the example illustrated in FIG. 4, the protective member 40 is disposed to cover the lower face 23B of the annular groove 23.

In the configuration in which the protective member 40 is disposed to cover at least a portion of the surface of the annular groove 23, the protective member 40 preferably covers 25% or more of the region of the surface of the annular groove 23, and more preferably covers 50% or more of the region of the surface of the annular groove 23. The protective member 40 that covers 25% or more of the region of the surface of the annular groove 23 facilitates reducing the temperature rise in the vicinity of the annular groove 23 at the time of abnormal heat generation of the battery.

Further, while in the above embodiment, the protective member 40 disposed in the annular groove 23 is composed only of the second metal material having the melting point of 500°C or lower, the protective member 40 may contain a material other than the second metal material that is, for example, a metal material or a resin material having a melting point of over 500°C.

### EXAMPLES

The present disclosure will be further described below by reference to Examples; however, the present disclosure is not limited to these Examples.

### <Examples>

### [Fabrication of Positive Electrode]

As a positive electrode active material, aluminum-containing nickel lithium cobaltate (LiNi_{0.88}Co_{0.09}Al_{0.03}O₂) was used. Then, 100 parts by mass of the positive electrode active material, 1.0 parts by mass of acetylene black that is a conductive agent, and 0.9 parts by mass of polyvinylidene fluoride (PVDF) that is a binder, were mixed in an N-methylpyrrolidone (NMP) dispersant to prepare a positive electrode mixture slurry. The prepared positive electrode mixture slurry was then uniformly applied to both sides of a positive electrode current collector composed of aluminum foil. After drying, the resulting positive electrode current collector was cut into a predetermined electrode size, and then roll-pressed with a roller to provide a belt-like positive electrode. Further, a positive electrode current collector exposed portion where a positive electrode mixture layer is not present is formed in a portion of the positive electrode in the longitudinal direction, and a positive electrode lead made of aluminum is fixed to the positive electrode current collector exposed portion by ultrasonic welding.

### [Fabrication of Negative Electrode]

As a negative electrode active material, a mixture in which 90 parts by mass of graphite powder and 10 parts by mass of Si oxide are mixed was used. Then, 100 parts by mass of the negative electrode active material, 1 part by mass of CMC that is a thickener, and 1 part by mass of styrene-butadiene rubber that is a binder were mixed in water to prepare a negative electrode mixture slurry. The negative electrode mixture slurry was then applied to both sides of a negative electrode current collector composed of copper foil. After drying, the resulting positive electrode current collector was cut into a predetermined electrode size, and then roll-pressed with a roller to provide a belt-like negative electrode. Further, a negative electrode current collector exposed portion where a negative electrode mixture layer is not present is formed at one end portion of the negative electrode in the longitudinal direction, and a negative electrode lead made of nickel is fixed to the negative electrode current collector exposed portion by ultrasonic welding.

### [Preparation of Electrode Assembly]

The positive electrode and the negative electrode thus fabricated were wound in a spiral shape with a separator interposed therebetween to prepare a wound electrode assembly. As the separator, a polyethylene microporous film having, on one side, a heat-resistant layer in which polyamide and alumina filler are dispersed was used.

### [Preparation of Non-Aqueous Electrolyte]

LiPF₆ was dissolved at a concentration of 1.2 moles/liter in a mixed solvent prepared by mixing ethylene carbonate (EC), ethyl methyl carbonate (EMC), and dimethyl carbonate (DMC) in a 3:3:4 volume ratio (25°C) to prepare a non-aqueous electrolyte.

### [Fabrication of Non-Aqueous Electrolyte Secondary Battery]

A metal can composed of a cylindrical steel member with a bottom having a diameter φ of 21 mm and a height of 70 mm was used as a housing can. The electrode assembly, with insulating plates disposed on top and bottom, respectively, was housed in the housing can, and thereafter, the negative electrode lead was welded onto the bottom portion of the housing can. Then, the housing can was subjected to spinning to form an annular groove. At this time, the annular groove was created to have a width (axial length) of 0.4 mm and a depth (radial length) of 2.0 mm.

An internal terminal plate was disposed on top of the annular groove with a gasket interposed between the internal terminal plate and the annular groove, and a positive electrode lead was ultrasonically welded to the upper face of the internal terminal plate. Subsequently, after depressurization and degassing, an external terminal plate was placed on the internal terminal plate, and the external terminal plate and the internal terminal plate were welded. Then, an upper end portion of the housing can was crimped to secure the sealing assembly on top of the housing can. Finally, a solder wire (composition: Sn 99%, Ag 0.3%, Cu 0.7%; melting point: about 230°C, manufactured by HOZAN, HS-341) having a substantially circular shape in a cross sectional view (diameter: 0.3 mm) was wound in the annular groove such that the soler wire was disposed in the entire region of the annular groove. The ratio of the area of the protective member relative to the area of the space in the annular groove in the axial cross sectional view of the housing can, which was calculated from the length of the wound solder wire, was 85%.

### <Comparative Example>

A non-aqueous electrolyte secondary battery was fabricated in a similar manner to Example 1 except that the protective member was not disposed in fabrication of the non-aqueous electrolyte secondary battery.

### [Evaluation of Heating Test of Battery]

Three batteries were made according to each of the Example and the Comparative Example. After each battery was placed in an oven of 500°C for 10 minutes heating, heating was stopped. Then, the housing can was externally observed to evaluate as to whether or not the annular groove has a hole (whether or not gas has ejected through the annular groove). As a result, in all of the three batteries in Example, no holes were observed, whereas in all of the three batteries in Comparative Example, holes were observed. It is assumed that these results are because of the protective member disposed in the annular groove, which reduces the temperature rise in the vicinity of the annular groove 23 at the time of occurrence of abnormality of the battery.

The present disclosure will be further described according to the following embodiments:

### Configuration 1:

A non-aqueous electrolyte secondary battery, comprising:
an electrode assembly including a positive electrode and a negative electrode;
a non-aqueous electrolyte;
a cylindrical housing can having a bottom, the housing can housing the electrode assembly and the non-aqueous electrolyte and containing a first metal material; and
a sealing assembly that closes an opening portion of the housing can, wherein
the housing can includes, on a side face of the housing can, an annular groove that is recessed radially inward of the housing can,
a protective member containing a second metal material is disposed within the annular groove, the protective member being in contact with at least a portion of a surface of the annular groove, and
the second metal material has a melting point that is lower than a melting point of the first metal material and is equal to or lower than 500°C.

### Configuration 2:

The non-aqueous electrolyte secondary battery according to configuration 1, wherein the second metal material includes at least one selected from the group consisting of tin, lead, and zinc.

### Configuration 3:

The non-aqueous electrolyte secondary battery according to configuration 1 or 2, wherein the second metal material is an alloy that includes at least two selected from the group consisting of tin, lead, and zinc.

### Configuration 4:

The non-aqueous electrolyte secondary battery according to any one of configurations 1 to 3, wherein the second metal material is solder.

### Configuration 5:

The non-aqueous electrolyte secondary battery according to any one of configurations 1 to 4, wherein the protective member has a wire shape and extends along a circumferential direction of the housing can.

### Configuration 6:

The non-aqueous electrolyte secondary battery according to any one of configurations 1 to 5, wherein the protective member covers a region that is equal to or greater than 25% of the surface of the annular groove.

### Configuration 7:

The non-aqueous electrolyte secondary battery according to any one of configurations 1 to 6, wherein a ratio of an area of the protective member within the annular groove relative to an area of a space of the annular groove in an axial cross sectional view of the housing can is equal to or greater than 80%.

### REFERENCE SIGNS LIST

10 non-aqueous electrolyte secondary battery, 11 positive electrode, 12 negative electrode, 13 separator, 14 electrode assembly, 16, 17 insulating plate, 18 positive electrode lead, 19 negative electrode lead, 20 housing can, 21 bottom portion, 22 side face portion, 23 annular groove, 23A upper face, 23B lower face, 24 opening portion, 25 opening side face portion, 26 crimped portion, 30 sealing assembly, 31 internal terminal plate, 31A thick portion, 31B center portion, 31C vent hole, 32 insulating member, 32A opening portion, 32B vent hole, 33 external terminal plate, 33A thin portion, 34 gasket, 40 protective member, α virtual line.

## Claims

1. A non-aqueous electrolyte secondary battery, comprising:
an electrode assembly including a positive electrode and a negative electrode;
a non-aqueous electrolyte;
a cylindrical housing can having a bottom portion, the housing can housing the electrode assembly and the non-aqueous electrolyte and containing a first metal material; and
a sealing assembly that closes an opening portion of the housing can, wherein
the housing can includes, on a side face portion of the housing can, an annular groove that is recessed radially inward of the housing can,
a protective member containing a second metal material is disposed within the annular groove, the protective member being in contact with at least a portion of a surface of the annular groove, and
the second metal material has a melting point that is lower than a melting point of the first metal material and is equal to or lower than 500°C.

2. The non-aqueous electrolyte secondary battery according to claim 1, wherein the second metal material includes at least one selected from the group consisting of tin, lead, and zinc.

3. The non-aqueous electrolyte secondary battery according to claim 1, wherein the second metal material is an alloy that includes at least two selected from the group consisting of tin, lead, and zinc.

4. The non-aqueous electrolyte secondary battery according to claim 1, wherein the second metal material is solder.

5. The non-aqueous electrolyte secondary battery according to claim 1, wherein the protective member has a wire shape and extends along a circumferential direction of the housing can.

6. The non-aqueous electrolyte secondary battery according to claim 1, wherein the protective member covers a region that is equal to or greater than 25% of the surface of the annular groove.

7. The non-aqueous electrolyte secondary battery according to claim 1, wherein a ratio of an area of the protective member within the annular groove relative to an area of a space of the annular groove in an axial cross sectional view of the housing can is equal to or greater than 80%.
